# EUROPÄISCHE PATENTSCHRIFT

(11) **EP 0 853 201 B1**
(45) Veröffentlichungstag und Bekanntmachung des Hinweises auf die Patenterteilung: **08.12.1999**
(21) Anmeldenummer: 98250002.7
(22) Anmeldetag: 08.01.1998
(51) Int. Cl.: F16C 1/22

(54) **Vorrichtung zum automatischen, stufenweisen Seillängenausgleich eines Bowdenzugsystems**
Device for automatically and stepwise adjusting the length of flexible cable control systems
Dispositif de réglage automatique par échelons de la longueur d'un câble dans des mécanismes de commande à distance

(30) Priorität: 11.01.1997 DE 19700746
(43) Veröffentlichungstag der Anmeldung: 15.07.1998
(73) Patentinhaber: Brose Fahrzeugteile GmbH & Co. KG, 96450 Coburg (DE)
(72) Erfinder: Klippert, Uwe, 36280 Oberaula (DE); Saunus, Christian, 08223 Grunbach (DE); Scheck, Georg, 96479 Weitramsdorf (DE)
(74) Vertreter: Ninnemann, Detlef, Dipl.-Ing.

(56) Entgegenhaltungen:
- EP-A- 0 658 696
- WO-A-96/25604
- DE-A- 3 805 046
- GB-A- 2 260 588

## Beschreibung

Die Erfindung betrifft eine Vorrichtung zum automatischen stufenweisen Seillängenausgleich eines Bowdenzugsystems gemäß dem Oberbegriff des Patentanspruchs 1. Sie zeichnet sich durch einen einfachen Aufbau, eine sichere Funktionsweise und die Möglichkeit seiner Herstellung wahlweise aus Kunststoff oder Metall aus.

Seillängenausgleichsvorrichtungen werden überall dort eingesetzt, wo Seile als kraftübertragende Stellglieder eingesetzt werden und die unter der Krafteinwirkung auftretende Seillängung zur Aufrechterhaltung der Funktion des Systems auszugleichen ist.

Weit verbreitet haben sich solche Vorrichtungen insbesondere für sogenannte Bowdenfensterheber zum Heben und Senken der Seitenscheiben von Kraftfahrzeugen. Vielen Seillängenausgleichsvorrichtungen gemeinsam ist die Verwendung von zwei zueinander verschiebbaren Teilen, die von einer Feder unter Spannung gehalten werden und eine Stellbewegung dann ausführen, wenn eine Seillose auftritt. Diese Stellbewegung entspricht quasi einer Verlängerung des Bowdenrohres.

Aus der DE-C-38 05 046 ist es bekannt, die infolge der Stellbewegung erreichte Relativposition der beiden zueinander verschiebbaren Teile durch Rastelemente zu verriegeln. Eine Vielzahl schmaler, aufeinanderliegender Rastelemente, die nacheinander hinter das freie Ende des verschiebbaren Teils fallen können, gewährleisten einen feinstufigen Seillängenausgleich. Diese Vorrichtung ist jedoch nicht in der Lage, zwischen einer sogenannten echten Seillosen und einer scheinbaren Seillosen, die bei hoher Belastung einer Seilschlaufe eines Seilfensterhebers im unbelasteten Bereich der Seilschlaufe auftritt, zu unterscheiden. Somit kann es zu erheblichen Verspannungen im System kommen, die aufgrund erhöhter Reibung zu einer Verschlechterung des Wirkungsgrades der Verstellvorrichtung und zu einem beschleunigten Verschleiß führen.

Aus der EP-A-0 658 696 ist eine Seillängenausgleichsvorrichtung mit einem rohrförmigen gehäuseseitigen Teil und einem darin verschiebbar gelagerten bowdenrohrseitigen Teil bekannt. Am bowdenrohrseitigen Teil stützt sich einerseits das Bowdenrohr und andererseits eine Druckfeder ab, die das bowdenrohrseitige Teil in Richtung des Bowdenrohres zu verschieben sucht. In der Wandung des rohrförmigen gehäuseseitigen Teils sind am Umfang verteilt mehrere Schlitze angebracht, durch die Rastzähne eines federelastisch ausgebildeten offenen Ringes hindurchgreifen und mit der Gegenverzahnung des bowdenrohrseitigen Teils in Eingriff treten können.

Die Ausdehnung der Schlitze in Verschieberichtung ist größer als die Höhe der Rastzähne, so daß bei einer Verschiebebewegung des bowdenrohrseitigen Teils zunächst die Rastzähne des federelastischen Ringes mitgenommen werden, bis sie auf die als Anschläge wirkenden Begrenzungsflächen der Schlitze treffen. Erst bei einer darüber hinausgehenden Verschiebebewegung kommt es auch zu einer Relativbewegung zwischen dem federelastischen und dem bowdenrohrseitigen Teil und zu einer dauerhaften, d.h. verriegelten Stellbewegung (Seillängenausgleichsbewegung), und zwar wenn die Verschiebebewegung wenigstens der Summe aus dem axialen Bewegungsspielraum des federelastischen Ringes in den Schlitzen des gehäuseseitigen Teils und aus der Teilung der sägezahnförmigen Verzahnung des bowdenrohrseitigen Teils entspricht. In jedem Falle steht der bezeichnete axiale Bewegungsspielraum zur Spannungsentlastung des Systems zur Verfügung, indem die Stützkräfte des Bowdenrohres eine begrenzte Rückstellbewegung des verschiebbaren bowdenrohrseitigen Teils bewirken, bis die Rastzähne des federelastischen Ringes den anderen Anschlag der Schlitze erreicht haben.

Die beschriebene Vorrichtung besitzt jedoch den Nachteil, daß der die Rastzähne tragende federelastische Ring wegen der für die Montage notwendigen großen Spreizfähigkeit nur aus Kunststoff gefertigt werden kann. Damit sind die von ihm übertragbaren Kräfte jedoch begrenzt.

Eine in ihrer Wirkungsweise identische und in ihrem Aufbau sehr ähnliche Vorrichtung ist aus der WO-A-96 25604 bekannt. Auch diese Vorrichtung besteht aus einem gehäuseseitigen Teil und einem darin verschiebbaren hülsenartigen bowdenseitigen Teil mit einer Außenverzahnung, in die die Verzahnung eines Verriegelungselements eingreifen kann. Auch bei dieser Vorrichtung ist das Verriegelungselement zwischen zwei Anschlägen verschiebbar gelagert, so daß ein Bewegungsspielraum mit Spielvorhaltung entsteht, der dem System ein axiales Längsspiel zur Verfügung stellt, das eine übermäßige Verspannung der Verstellvorrichtung verhindert.

Von Nachteil ist jedoch, daß die innenliegende Anordnung des Rastelements zur Ausbildung vergleichsweise kleiner Rastzähne führt. In Verbindung mit dem wegen des Erfordernisses der elastischen Verformbarkeit notwendigerweise aus Kunststoff zu fertigenden Verriegelungselement kann auch diese Vorrichtung nur begrenzt belastet werden.

Der Erfindung liegt die Aufgabe zugrunde, eine Vorrichtung zum automatischen, stufenweisen Seillängenausgleich mit Spielvorhaltung zu entwickeln, die einen einfachen Aufbau, eine gute Anpaßbarkeit auch an hohe Belastungen und eine einfache Montierbarkeit aufweist.

Erfindungsgemäß wird die Aufgabe durch die Merkmale der Patentansprüche 1 bzw. 4 gelöst.

Vorzugsvarianten der Erfindung sind den Merkmalen der Ansprüche 2, 3 und 5 bis 10 zu entnehmen.

Demnach kommen gemäß einer ersten Variante der Erfindung (Patentanspruch 1) mehrere zueinander beabstandete und in separaten Führungsschlitzen axial verschiebbare Rastelemente zur Anwendung, die nacheinander hinter das freie Ende des bowdenrohrseitigen Teils schnappen können, falls dieses beim Auftreten einer Seillose bezüglich des gehäuseseitigen Teils genügend weit in axialer Richtung verschoben wird. Die in axialer Richtung liegenden Begrenzungsflächen der Führungsschlitze dienen für die Rastelemente als Anschlagflächen.

Ihr Bewegungsspielraum innerhalb der Führungsschlitze repräsentiert den (minimal vorhandenen) Stellweg, dessen Rückstellbewegung nicht verriegelt werden kann. D.h., dieser Rückstellweg steht dem System nach einer Verspannung zur Entspannung immer zur Verfügung. Vorzugsweise entspricht die axiale Ausdehnung der Führungsschlitze dem Mehrfachen der Höhe der Rastelemente, so daß ein Rückstellweg von etwa 3 mm bis 10 mm je einem Meter Stahlseil gewährleistet wird.

Gemäß einer zweiten Variante der Erfindung (Patentanspruch 4) lagert zwischen dem gehäuseseitigen Teil und dem bowdenrohrseitigen Teil ein Zwischenteil, dessen freies Ende mit den federnd vorbelasteten, in Führungsschlitzen im wesentlichen spielfrei lagernden Rastelementen in Eingriff treten kann. Statt dessen ist ein Paar axial beabstandeter Anschläge vorgesehen, das Bestandteil des verschiebbaren bowdenrohrseitigen Teils ist. Zwischen die Anschläge greift ein Formschlußelement des Zwischenteils ein, so daß sich dieses bezüglich des bowdenrohrseitigen Teils begrenzt axial verschieben läßt. Dieser Bewegungsspielraum entspricht dem vorstehend beschriebenen, nicht verriegelbaren Rückstellweg, der eine übermäßige Verspannung des Bowdenzugsystems verhindert.

Bei dieser Erfindungsvariante wird die Stützkraft des Bowdenrohres vom verschiebbaren bowdenrohrseitigen Teil über das Zwischenteil und eines der Rastelemente in das gehäuseseitige Teil eingeleitet. Die Stützfläche zwischen dem bowdenseitigen Teil und dem Zwischenteil stellt eine der beiden Anschlagflächen dar, die den Bewegungsspielraum des bowdenrohrseitigen Teils begrenzt. Es ist ohne weiteres möglich, den Bewegungsspielraum größer als die Teilung der Rastelemente zu gestalten, wodurch einerseits ein sehr feinstufiger Seillängenausgleich gewährleistet und andererseits ein großer Rückstellweg zur Vermeidung von Systemverspannungen bereitgestellt werden kann.

Da beide Erfindungsvarianten ohne Verzahnungselemente auf der äußeren Kontur der Führungshülse auskommen, kann das bowdenrohrseitige Teil sehr einfach sowohl aus Kunststoff als auch aus einem metallischen Werkstoff gefertigt werden. Die eindeutigen Verriegelungsbedingungen zwischen den federnd vorbelasteten Rastelementen und dem zugeordneten freien Ende des bowdenrohrseitigen Teils bzw. des Zwischenteils verleihen der erfindungsgemäßen Vorrichtung eine hohe Funktionssicherheit und Belastbarkeit.

Nachfolgend wird die Erfindung anhand von Ausführungsbeispielen und den dargestellten Figuren näher erläutert. Es zeigen:
- Figur 1a, 1b: eine perspektivische Darstellung einer Seilängenausgleichsvorrichtung mit axialverschiebbaren Rastelementen mit vollständig komprimierter Druckfeder;
- Figur 2a, 2b: eine perspektivische Darstellung der Seillängenausgleichsvorrichtung nach einer anfänglichen Verschiebebewegung, die etwa dem Bewegungsspielraum der Rastelemente in den Führungsschlitzen entspricht;
- Figur 3a, 3b: eine perspektivische Darstellung der Seillängenausgleichsbewegung nach Einrastung des mittleren Rastelements und Ausführung der entlastenden Rückstellbewegung;
- Figur 4: eine Schnittdarstellung einer Seillängenausgleichsbewegung mit einem Zwischenteil zwischen dem gehäuseseitigen und dem bowdenrohrseitigen Teil.

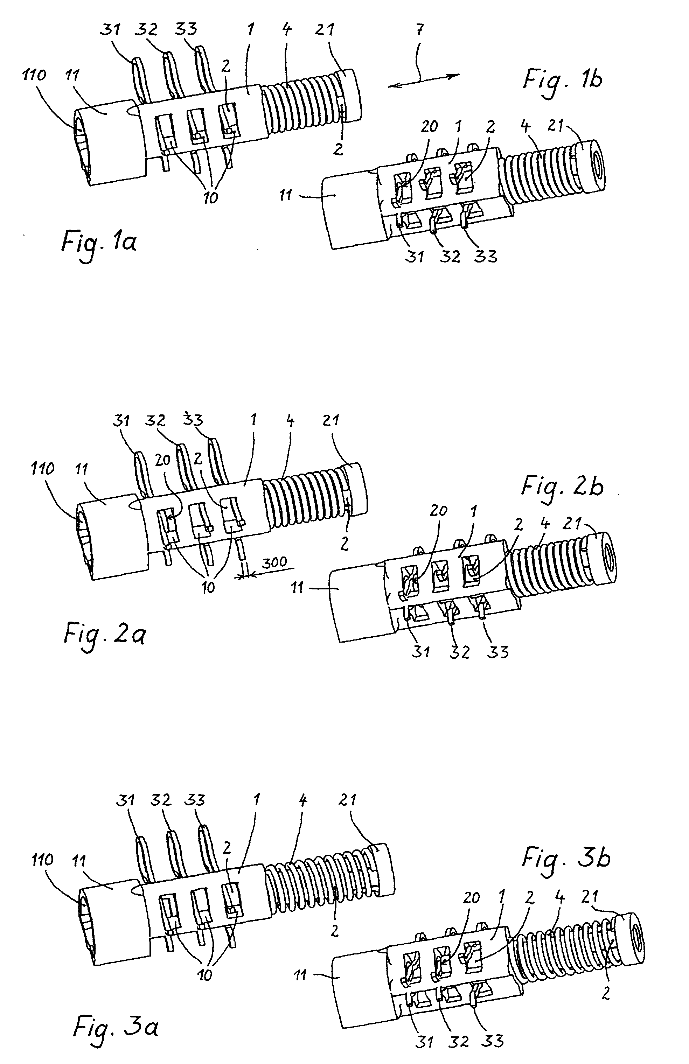

Die Figuren 1a bis 3b zeigen ein Ausführungsbeispiel der Erfindung mit axial verschieblichen Rastelementen 31, 32, 33 in drei Verschiebepositionen des bowdenrohrseitigen Teils 2 in jeweils zwei verschiedenen perspektivischen Ansichten. Demnach besteht die Seillängenausgleichsvorrichtung aus einem gehäuseseitigen Teil 1 mit einem Adapter 11, mit dessen Hilfe die Vorrichtung beispielsweise auf ein (nicht dargestelltes) Antriebsgehäuse oder eine Seilumlenkung eines Bowdenrohrfensterhebers aufgesteckt werden kann. Selbstverständlich ist es grundsätzlich auch möglich, das gehäuseseitige Teil 1 einstückig an ein durch Gießen oder Spritzgießen herzustellendes Gehäuse anzuformen.

Der sich an den Adapter 11 anschließende Bereich des gehäuseseitigen Teils 1 ist rohrförmig ausgebildet und weist drei gleichmäßig beabstandete Führungsschlitze 10 auf, in denen klammerartige Rastelemente 31, 32, 33 lagern. Sie liegen zunächst mit Vorspannung auf der Mantelfläche des bowdenseitigen Teils 2 auf, bevor sie - bei entsprechender Verschiebebewegung - nacheinander vor das freie Ende 20 schnappen und das bowdenseitige Teil 2 abstützen. Innerhalb des gehäuseseitigen Teils 1 ist das bowdenrohrseitige Teil 2 verschiebbar geführt. An seinem ringförmigen Absatz 21 greift die Druckfeder 4 an und versucht, das bowdenseitige Teil 2 entgegen der Stützkraft des Bowdenrohres (in Verschieberichtung 7) zu bewegen.

Entsprechend den Darstellungen dieses Ausführungsbeispiels mißt die Weite der Führungsschlitze 10 etwa das drei- bis vierfache der Dicke 300 der Rastelemente 31 , 32, 33. Somit umfaßt der Spielraum der Rastelemente 31, 32, 33, und damit das Maß der für die Entspannung des Systems vorgesehene Rückstellbewegung, das zwei- bis dreifache der Dicke der Rastelemente 31, 32, 33.

Die in axialer Richtung liegenden Begrenzungsflächen der Führungsschlitze stellen Anschlagflächen für die Rastelemente 31, 32, 33 dar, die bei jeder Verschiebung des bowdenseitigen Teils 2 mitgeschleppt werden, solange die Rastelemente 31, 32, 33 auf der Mantelfläche des bowdenseitigen Teils 2 klemmen.

Gemäß den Figuren 1a und 1b stützt sich das freie Ende 20 des bowdenseitigen Teils 2 auf dem ersten Rastelement 31 ab, während die anderen Rastelemente 32, 33 mit elastischer Vorspannung auf dem Teil 2 aufliegen. Die Figuren 2a und 2b zeigen eine anfängliche Verschiebebewegung des Teils 2, wobei die Rastelemente 32, 33 bis zu den gegenüberliegenden Anschlagflächen der betreffenden Führungsschlitze 10 mitgeschleppt wurden. Erst wenn das bowdenseitige Teil 2 soweit verschoben wird, daß das freie Ende 20 wenigstens den in Verschieberichtung 7 liegenden Anschlag des zum Rastelement 32 gehörenden Führungsschlitzes 10 erreicht, kann ein weiterer diskreter Betrag einer Seillängenausgleichsbewegung durch das Rastelement 32 verriegelt werden.

Sobald vom Bowdenrohr wieder eine Stützkraft aufgebracht wird, Sobald vom Bowdenrohr wieder eine Stützkraft aufgebracht wird, kommt es zu der schon beschriebenen Rückstellbewegung, bei der das Rastelement 32 gegen die andere Anschlagfläche des Führungsschlitzes 10 zurückgeführt wird (siehe Figuren 3a und 3b). Dies führt zu einer Verminderung der Zugspannung im Seil.

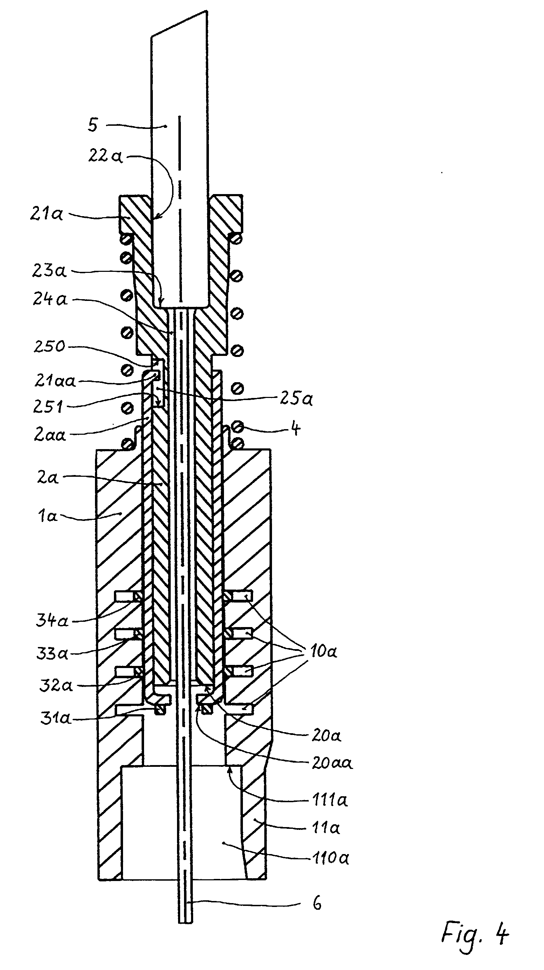

Eine weitere Erfindungsvariante zeigt die Schnittdarstellung von Figur 4. In ihrem ebenfalls rohrförmigen bowdenseitigen Teil 2a sind Führungsschlitze 10a zur weitestgehend spielfreien Aufnahme der Rastelemente 31a, 32a, 33a, 34a eingearbeitet. Innerhalb des Teils la ist das bowdenseitige Teil 2a verschiebbar geführt, dessen oberes Ende eine Erweiterung des Seilkanals mit Anschlagfläche 23a zur Aufnahme des Bowdenrohres 5 aufweist. Ein ringförmiger Absatz 21a dient zur Abstützung der Druckfeder 4. Eine Zwischenhülse 2aa steht mit dem Schaft des bowdenseitigen Teils 2a begrenzt verschiebbar und über die Ausnehmung 25a und das Formschlußelement 21aa formschlüssig in Verbindung.

Die Wirkungsweise der Vorrichtung ist folgende: Sobald das Bowdenrohr 5 aufgrund einer Seillose hinreichend entlastet wird, kann die Druckfeder 4 das bowdenseitige Teil 2a um einen gewissen Betrag aus der Führung des gehäuseseitigen Teils 1a herausdrücken. Dabei wird die Zwischenhülse 2aa von den Rastelementen 32a, 33a, 34a zunächst festgehalten, bis das Formschlußelement 21aa mit der Anschlagfläche 251 in Eingriff tritt. Erst bei einer weiteren Verschiebung wird die Zwischenhülse 2aa mitgeschleppt und kann gegebenenfalls mit ihrem freien Ende 20aa das nächste Rastelement 32a passieren. In jedem Falle kommt es zu einer Rückstellbewegung des bowdenseitigen Teils 2a mit dem darin eingesteckten Bowdenrohr 5, wenn die Reaktionskraft des Bowdenrohrs 5 wieder einsetzt. Dabei senkt sich das bowdenseitige Teil 2a in der Zwischenhülse 2aa soweit ab, bis die freien Enden 20a und 20aa aufeinandertreffen bzw. bis das Formschlußelement 21aa und der Anschlag 250 miteinander in Eingriff treten. Auch bei diesem Ausführungsbeispiel wird das Maß der möglichen Systementspannung vom Bewegungsspielraum zwischen den Teilen 2a und 2aa bestimmt.

### Bezugszeichenliste

- 1: Gehäuse
- 1a: Gehäuse
- 10: Führungsschlitz
- 10a: Führungsschlitz
- 11: Adapter
- 11a: Adapter
- 110: Adapteröffnung
- 110a: Adapteröffnung
- 111a: Anschlag

- 2: Führungshülse
- 2a: Führungshülse
- 2aa: Zwischenhülse
- 20: freies Ende der Führungshülse/Anschlag
- 20a: freies Ende der Führungshülse/Anschlag
- 20aa: freies Ende der Führungshülse/Anschlag
- 21: ringförmiger Absatz
- 21a: ringförmigerAbsatz
- 21aa: Formschlußelemente
- 22: Bowdenrohraufnahme
- 22a: Bowdenrohraufnahme
- 23a: Anschlagfläche
- 24a: Kanal für das Seil
- 25a: Ausnehmunq
- 250: oberer Anschlag
- 251: unterer Anschlag

- 3: Rastelement
- 31a: Rastelement
- 32: Rastelement
- 32a: Rastelement
- 33: Rastelement
- 33a: Rastelement
- 34: Rastelement
- 300: Dicke des Rastelements

- 4: Feder

- 5: Bowdenrohr

- 6: Seil

- 7: Verschieberichtung

## Patentansprüche

1. Vorrichtung zum automatischen, stufenweisen Seillängenausgleich eines Bowdenzugsystems, insbesondere eines Bowdenrohr-Fensterhebers, in dem ein von einer Feder (4) gespanntes Seil geführt ist, wobei sich die Feder (4) zwischen einem gehäuseseitigen Teil (1) und einem dazu verschiebbaren bowdenrohrseitigen Teil (2) abstützt, und mit mehreren in Richtung der Mantelfläche des bowdenrohrseitigen Teils federnd vorbelasteten Rastelementen (31,32,33), die bei einer Verschiebung des bowdenrohrseitigen Teils nacheinander vor die Stirnfläche dieses Teils rasten können, so daß eine Rückstellbewegung des bowdenrohrseitigen Teils verhindert wird, und mit wenigstens einem Paar voneinander beabstandeter Anschläge, die mit mindestens einem begrenzt verschiebbaren Teil derart korrespondieren, daß ein seillängenausgleichender Rastvorgang erst nach Überwindung einer vorgegebenen Stellbewegung zwischen dem gehäuseseitigen Teil und dem bowdenrohrseitigen Teil erfolgen kann,
**dadurch gekennzeichnet,**
daß die begrenzt verschiebbaren Teile Rastelemente (31, 32, 33) sind, die zueinander einen axialen Abstand aufweisen und daß jedem Rastelement (31, 32, 33) ein Paar Anschläge zugeordnet ist, zwischen denen das Rastelement (31, 32, 33) begrenzt axial verschiebbar lagert.

2. Vorrichtung nach Anspruch 1, **dadurch gekennzeichnet,** daß die Rastelemente (31, 32, 33) in Führungsschlitzen (10) des gehäuseseitigen Teils (1) lagern, wobei die axiale Ausdehnung der Führungsschlitze (10) dem Mehrfachen der Höhe der Rastelemente (31 , 32, 33) entspricht und die axialen Begrenzungsflächen der Führungsschlitze (10) als Anschläge dienen.

3. Vorrichtung nach Anspruch 1 und 2, **dadurch gekennzeichnet,** daß die Rastelemente (31, 32, 33) aus einzelnen oder miteinander verbundenen metallischen Klammern bestehen, die im wesentliche U-förmig ausgebildet sind, wobei wenigstens ein Schenkel eine nach außen gerichtete Ausbauchung aufweist, welche die Mantelfläche des verschiebbaren bowdenrohrseitigen Teils (2) teilweise umschließt und so eine Verliersicherung bildet.

4. Vorrichtung zum automatischen, stufenweisen Seillänenausgleich eines Bowdenzugsystems, insbesondere eines Bowdenrohr-Fensterhebers, in dem ein von einer Feder (4) gespanntes Seil (6) geführt ist, wobei sich die Feder zwischen einem gehäuseseitigen Teil (1a) und einem dazu verschiebbaren bowdenrohrseitigen Teil (2a) abstützt, und mit mehreren in Richtung der Mantelfläche des bowdenrohrseitigen Teils federnd vorbelasteten Rastelementen (31a, 32a, 33a, 34a), die bei einer Verschiebung des bowdenrohrseitigen Teils nacheinander vor die Stirnfläche (20a) dieses Teils rasten können, so daß eine Rückstellbewegung des bowdenrohrseitigen Teils verhindert wird, und mit wenigstens einem Paar voneinander beabstandeter Anschläge (250, 251), die mit mindestens einem begrenzt verschiebbaren Teil (2aa) derart korrespondieren, daß ein seillängenausgleichender Rastvorgang erst nach Überwindung einer vorgegebenen Stellbewegung zwischen dem gehäuseseitigen Teil und dem bowdenrohrseitigen Teil erfolgen kann,
**dadurch gekennzeichnet,**
daß das begrenzt verschiebbare Teil ein zwischen dem gehäuseseitigen Teil (la) und dem bowdenrohrseitigen Teil (2a) lagerndes Zwischenteil (2aa) ist, mit dem die federnd vorbelasteten, in einem axialen Abstand zueinander angeordneten Rastelemente (31 a, 32a, 33a, 34a) im Eingriff stehen und daß das Paar beabstandeter Anschläge (250, 251) Bestandteil des bowdenrohrseitigen Teils (2a) ist, zwischen die ein Formschlußelement (21 aa) des Zwischenteils (2aa) eingreift.

5. Vorrichtung nach Anspruch 4, **dadurch gekennzeichnet,** daß das Zwischenteil (2aa) hülsenförmig ausgebildet ist und die Führungshülse des bowdenrohrseitigen Teils (2a) weitestgehend umschließt.

6. Vorrichtung nach Anspruch 5, **dadurch gekennzeichnet,** daß die Zwischenhülse (2aa) an ihrem freien, den Rastelementen (31a, 32a, 33a, 34a) zugeordneten Ende eine ringförmige Umstellung (20aa) aufweist, die einerseits mit einem Rastelement (31 a, 32a, 33a, 34a) und andererseits mit dem Ende der Führungshülse (2a) in Eingriff treten kann.

7. Vorrichtung nach wenigstens einem der voranstehenden Ansprüche, **dadurch gekennzeichnet,** daß der Bewegungsspielraum des mindestens einen begrenzt verschiebbaren Teils (31, 32, 33) zwischen dem Paar beabstandeter Anschläge wenigstens dem Doppelten der Höhe der Rastelemente (31 , 32, 33) entspricht.

8. Vorrichtung nach wenigstens einem der voranstehenden Ansprüche, **dadurch gekennzeichnet,** daß der Bewegungsspielraum des mindestens einen begrenzt verschiebbaren Teils (2aa) zwischen dem Paar beabstandeter Anschläge (250, 251) wenigstens dem axialen Abstand benachbarter Rastelemente (31a, 32a, 33a, 34a) entspricht.

9. Vorrichtung nach wenigstens einem der voranstehenden Ansprüche, **dadurch gekennzeichnet,** daß der Bewegungsspielraum des mindestens einen begrenzt verschiebbaren Teils (31 , 32, 33, 2aa) zwischen dem Paar beabstandeter Anschläge zwischen 3 und 10 mm beträgt.

## Claims

1. A device for automatic, stepwise longitudinal adjustment of a cable of a Bowden cable system, in particular of a Bowden tubing window lifter, in which a cable tensioned by a spring (4) is guided, wherein the spring (4) supports itself between a component on the casing side (1) and a component on the Bowden tubing side (2) which can be displaced thereto, and with several stoppers (31, 32, 33) which are spring-loaded in the direction of the surface shell of the component on the Bowden tubing side, whereby upon displacement of the component on the Bowden tubing side these stoppers can lock one after the other before the end of this component, in such a way that backward movement of the component on the Bowden tubing side is prevented, and with at least one pair of catches positioned at a distance from one another whereby these catches correspond to at least one component which can be displaced to a limited extent in such a way that a locking process for cable longitudinal adjustment cannot take place until there has been a certain movement between the component on the casing side and the component on the Bowden tubing side,
**characterised in that**
the components which can be displaced to a limited extent are stoppers (31, 32, 33) which are axially spaced relation to one another, and in that a pair of catches is associated with each stopper (31, 32, 33), between which the stoppers are limitedly axially displacesble.

2. A device according to Claim 1 **characterised in that** the stoppers (31, 32, 33) are positioned in guideways (10) of the component on the casing side (1), whereby the axial extension of the guideways (10) corresponds to several times the height of the stoppers (31, 32, 33) and the axial areas of contact of the guideways (10) serve as catches.

3. A device according to Claim 1 and Claim 2 **characterised in that** the stoppers (31, 32, 33) consist of metal clamps which are individual or connected to one another, whereby these clamps are essentially U-shaped, and whereby at least one lateral side bulges outwards, partly surrounding the surface shell of the component on the Bowden tubing side (2) which can be displaced, and thus forming an anti-loss mechanism.

4. A device for automatic, stepwise longitudinal adjustment of a cable of a Bowden cable system, in particular of a Bowden tubing window lifter, in which a cable (6) tensioned by a spring (4) is guided, wherein the spring supports itself between a component on the casing side (la) and a component on the Bowden tubing side (2a) which can be displaced thereto, and with several stoppers (31a, 32a, 33a, 34a) which are spring-loaded in the direction of the surface shell of the component on the Bowden tubing side, whereby upon displacement of the component on the Bowden tubing side these stoppers can lock one after the other before the end (20a) of this component in such a way that backward movement of the component on the Bowden tubing side is prevented, and with at least one pair of catches (250, 251) positioned at a distance from one another, whereby these catches correspond to at least one component (2aa) which can be displaced to a limited extent in such a way that a locking process for cable longitudinal adjustment cannot take place until there has been a certain movement between the component on the casing side and the component on the Bowden tubing side,
**characterised in that**
the component which can be displaced to a limited extent is an intermediate component (2aa) positioned between the component on the casing side (la) and the component on the Bowden tubing side (2a), whereby the spring-loaded stoppers (31a, 32a, 33a, 34a) which are positioned at an axial distance in relation to one another can engage with the intermediate component (2aa), and the pair of catches (250, 251) positioned at a distance are a constituent part of the component on the Bowden tubing side (2a), between which a locking component (21aa) of the intermediate component (2aa) engages.

5. A device according to Claim 4 **characterised in that** the intermediate component (2aa) is formed as a shell and encloses the guide shell of the component on the Bowden tubing side (2a) as far as possible.

6. A device according to Claim 5 **characterised in that** the intermediate shell (2aa) has a ring-shaped adjustment (20aa) on its free end which is assigned to the stoppers (31a, 32a, 33a, 34a), whereby this ring-shaped adjustment (20aa) can engage on the one hand with a stopper (31a, 32a, 33a, 34a) and on the other hand with the end of the guide shell (2a).

7. A device according to at least one of the preceding claims **characterised in that** the displacement area of the minimum of one component with limited displacement (31, 32, 33) between the pair of catches positioned at a distance from one another corresponds to at least double the height of the stoppers (31, 32, 33).

8. A device according to at least one of the preceding claims **characterised in that** the displacement area of the minimum of one component with limited displacement (2aa) between the pair of catches (250, 251) positioned at a distance from one another corresponds to at least the axial distance of adjacent stoppers (31a, 32a, 33a, 34a).

9. A device according to at least one of the preceding claims **characterised in that** the displacement area of the minimum of one component with limited displacement (31, 32, 33, 2aa) between the pair of catches positioned at a distance from one another is between 3 and 10 mm.

## Revendications

1. Dispositif de réglage automatique échelonné de la longueur d'un câble d'un système de câble Bowden, notamment d'un lève-glace à tube Bowden, dans lequel est guidé un câble tendu par un ressort (4), dans lequel le ressort (4) prend appui entre une partie (1) solidaire d'un boîtier et une partie (2) déplaçable par rapport à la précédente et solidaire du tube Bowden, et comportant plusieurs éléments d'encliquetage (31, 32, 33) qui sont précontraints élastiquement en direction de la surface enveloppe de la partie solidaire du tube Bowden et qui, lors d'un déplacement de la partie solidaire du tube Bowden, peuvent s'encliqueter successivement devant la surface frontale de cette partie de sorte qu'un mouvement de rappel de la partie solidaire du tube Bowden est empêché, et comportant au moins un couple de butées distantes l'une de l'autre, qui correspondent à au moins une partie déplaçable d'une manière limitée de telle sorte qu'une opération d'encliquetage réalisant un réglage de la longueur du câble ne peut intervenir qu'après l'exécution d'un déplacement déterminé de réglage entre la partie solidaire du boîtier et la partie solidaire du tube Bowden,
caractérisé en ce
que les parties déplaçables d'une manière limitée sont des éléments d'encliquetage (31, 32, 33), qui sont séparées par une certaine distance axiale, et qu'à chaque élément d'encliquetage (31, 32, 33) est associé un couple de butées, entre lesquelles l'élément d'encliquetage (32, 33, 33) est monté de manière à être déplaçable axialement d'une manière limitée.

2. Dispositif selon la revendication 1, caractérisé en ce que les éléments d'encliquetage (31, 32, 33) sont montés dans des fentes de guidage (10) de la partie (1) solidaire du boîtier, l'étendue axiale des fentes de guidage (10) correspondant au multiple de la hauteur des éléments d'encliquetage (31, 32, 33), tandis que les surfaces axiales de limitation des fentes de guidage (10) sont utilisées comme butées.

3. Dispositif selon les revendications 1 et 2, caractérisé en ce que les éléments d'encliquetage (31, 32, 33) sont constitués par des agrafes métalliques individuelles ou reliées entre elles, qui sont agencées essentiellement en forme de U, au moins une branche possédant un renflement dirigé vers l'extérieur, qui entoure partiellement la surface enveloppe de la partie déplaçable (2) solidaire du tube Bowden et forme ainsi un système imperdable.

4. Dispositif de réglage automatique échelonné de la longueur d'un câble d'un système de câble Bowden, notamment d'un lève-glace à tube Bodwen, dans lequel est guidé un câble (6) tendu par un ressort (4), et dans lequel le ressort (4) prend appui entre une partie (la) solidaire d'un boîtier et une partie (2a) déplaçable par rapport à la précédente et solidaire du tube Bowden, et comportant plusieurs éléments d'encliquetage (31a, 32a, 33a, 34a) qui sont précontraints élastiquement en direction de la surface enveloppe de la partie solidaire du tube Bowden et qui, lors d'un déplacement de la partie solidaire du tube Bowden, peuvent s'encliqueter successivement devant la surface frontale (20a) de cette partie de sorte qu'un mouvement de rappel de la partie solidaire du tube Bowden est empêché, et comportant au moins un couple de butées (250, 251) distantes l'une de l'autre, qui correspondent à au moins une partie (2aa) déplaçable d'une manière limitée de telle sorte qu'une opération d'encliquetage réalisant un réglage de la longueur du câble ne peut intervenir qu'après l'exécution d'un déplacement déterminé de réglage entre la partie solidaire du boîtier et la partie solidaire du tube Bowden,
caractérisé en ce que
que la partie déplaçable de façon limitée est une partie intercalaire (2aa), qui est montée entre la partie (la) solidaire du boîtier et la partie (2a) solidaire du tube Bowden et avec laquelle engrènent les éléments d'encliquetage (31a, 32a, 33a, 34a), qui sont précontraints élastiquement et sont disposés à une certaine distance axiale les uns des autres, et que le couple de butées distantes (250, 251), entre lesquelles s'engage un élément de liaison par formes complémentaires (21aa) de la partie intercalaire (2aa), fait partie de la partie (2a) solidaire du tube Bowden.

5. Dispositif selon la revendication 4, caractérisé en ce que la partie intercalaire (2aa) est agencée sous la forme d'une douille et entoure dans une très large mesure la douille de guidage de la partie (2a) solidaire du tube Bowden.

6. Dispositif selon la revendication 5, caractérisé en ce que la douille intercalaire (2aa) comporte, sur son extrémité libre, associée aux éléments d'encliquetage (31a, 32a, 33a, 34a), un rabat de forme annulaire (20aa), qui peut engrener d'une part avec un élément d'encliquetage (31a, 32a, 33a, 34a) et d'autre part avec l'extrémité de la douille de guidage (2a).

7. Dispositif selon au moins l'une des revendications précédentes, caractérisé en ce que le jeu de déplacement de la au moins une partie déplaçable de façon limitée (31, 32, 33) entre le couple de butées distantes correspond au moins au double de la hauteur des éléments d'encliquetage (31, 32, 33).

8. Dispositif selon au moins l'une des revendications précédentes, caractérisé en ce que le jeu de déplacement de la au moins une partie (2aa) déplaçable de façon limitée entre le couple de butées distantes (250, 251) correspond au moins à la distance axiale d'éléments d'encliquetage voisins (31a, 32a, 33a, 34a).

9. Dispositif selon au moins l'une des revendications précédentes, caractérisé en ce que le jeu de déplacement de la au moins une partie déplaçable de façon limitée (31, 32, 33, 2aa) entre le couple de butées distances est comprise entre 3 et 10 mm.
